# EUROPÄISCHE PATENTSCHRIFT

(11) **EP 0 936 102 B1**
(45) Veröffentlichungstag und Bekanntmachung des Hinweises auf die Patenterteilung: **09.10.2002**
(21) Anmeldenummer: 99101840.9
(22) Anmeldetag: 28.01.1999
(51) Int. Cl.: B60N 2/08, B60N 2/44, F15B 7/00

(54) **Betätigungsvorrichtung, insbesondere für eine Verriegelungseinrichtung an einem Fahrzeugsitz**
Actuating device, in particular for a locking device in a vehicle seat.
Dispositif d'actionnement, en particulier pour un dispositif de verrouillage dans un siège de véhicule

(30) Priorität: 17.02.1998 DE 29802728 U
(43) Veröffentlichungstag der Anmeldung: 18.08.1999
(73) Patentinhaber: Johnson Controls GmbH, 51399 Burscheid (DE)
(72) Erfinder: Budweg, Mario, 42499 Hückeswagen (DE)
(74) Vertreter: Patentanwälte Dr. Solf & Zapf

(56) Entgegenhaltungen:
- DE-A- 3 720 936
- DE-A- 19 548 246
- FR-A- 2 617 916
- GB-A- 1 375 990
- US-A- 1 398 291
- US-A- 3 333 418
- US-A- 4 413 214
- US-A- 5 613 733

## Beschreibung

Die Erfindung betrifft eine Betätigungsvorrichtung gemäß dem Oberbegriff des Anspruchs 1.

Verriegelungsvorrichtungen, beispielsweise für Klappen, Deckel, Freischwenkeinrichtungen für Rückenlehenen und Längsverstelleinrichtungen von Fahrzeugsitzen werden in der Regel über Draht- und Bowdenzüge, aber auch über Gestänge betätigt. Drahtzüge sind zwar kostengünstig in der Herstellung, erfordern jedoch für eine einwandfreie Funktion in der Regel verhältnismäßig aufwendige Justierarbeiten bei der Montage. Weiterhin ist bei der Verlegung dafür zu sorgen, daß sich die Drahtzüge frei, beispielsweise innerhalb des Rahmens einer Rückenlehne, bewegen können, um erhöhte Reibkräfte durch die Berührung mit Polsterteilen und dgl. zu vermeiden und damit die aufzuwendende Kraft gering zu halten. So verlangt die Leichtgängigkeit von Bowdenzügen große Verlegeradien bei der Führung der Züge um Ecken. Ist das Einhalten erforderlichen Krümmungsradien nicht möglich und werden diese zu klein gewählt, ist eine Erhöhung der Reibung zwischen der Drahtseele und der Wandung nicht zu vermeiden, was sich ungünstig auf die Betätigungskraft an der Handhabe auswirkt bzw. verhindert, daß die Drahtseele des Bowdenzuges in die Endstellung zurückkehrt. Ein erheblicher Nachteil von Draht- und Bowdenzügen ist auch das Auslängen der Drähte beim Gebrauch. Die Anwendung von Betätigungsgestängen ist normalerweise sehr eingeschränkt und nur bei einer einfachen Bewegungsführung möglich.

In der US-PS 4 635 999 ist ein verschwenkbarer Fahrzeugsitz beschrieben, der in einem Flugzeug eingesetzt werden kann und ein Bodenteil und ein Rückenteil umfaßt, die zusammen um eine quer zum Sitz unter dem Bodenteil verlaufende Achse gegeneinander verschwenkbar sind. Um die Teile in verschiedenen Winkelstellungen bezüglich der Achse zu sichern, ist ein hydraulischer Zylinder vorgesehen. Das Rückenteil kann zusätzlich über die gleiche oder eine weitere quer zum Sitz verlaufende Achse gegenüber dem Bodenteil verschwenkt werden. Der hydraulische Zylinder ist schwenkbar an einem festen Teil, wie an einem Rahmenteil des Sitzes, befestigt. Innerhalb des Zylinders befindet sich ein doppeltwirkender Kolben, der über eine Stange schwenkbar mit dem Bodenteil verbunden ist. Hydraulikleitungen führen von jedem Ende des Zylinders zu einem Steuerventil, welches derart angeordnet ist, daß es von einem Passagier bequem bedient werden kann. Durch ein Öffnen des Steuerventils kann die Hydraulikflüssigkeit von einer Kammer des Zylinders in die andere Kammer überströmen, wobei der Stellvorgang erfolgt.

Aus der US-PS 3 553 967 ist eine hydraulische Steuereinrichtung der eingangs beschriebenen Art bekannt, für die als spezifisches Einsatzgebiet die Steuerung einer hydraulischen Verriegelung einer verstellbaren Rückenlehne eines Flugzeugsitzes angegeben ist. Die bekannte Steuereinrichtung umfaßt eine Steuereinheit und eine Arbeitseinheit, die über eine flexible Hydraulikleitung miteinander verbunden sind. Ein Stößel in der Steuereinheit verschiebt eine bewegliche Wand, die eine mit Hydraulikfüssigkeit gefüllte Kammer begrenzt, wodurch eine korrespondierende Bewegung einer ebenfalls beweglichen Wand der Arbeitseinheit herbeigeführt wird. Die Steuereinrichtung selbst ist derart ausgelegt, daß sie per Knopfdruck bedient werden kann. Die beweglichen Wände in der Steuer- und in der Arbeitseinheit sind vorzugsweise als Membranen ausgebildet.

Eine hydraulische Betätigungsvorrichtung ist in US 5 613 733 offenbart.

Durch die vorbeschriebenen hydraulisch wirkenden Verriegelungs- bzw. Betätigungsvorrichtungen werden die Nachteile der auf der Basis von Draht- und Bowdenzügen sowie Gestängen arbeitenden Betätigungsvorrichtungen zwar grundsätzlich überwunden, jedoch sind diese Vorrichtungen aufgrund der Verwendung von doppeltwirkenden Kolben bzw. beweglichen Wänden aufwendig in der Herstellung.

Der Erfindung liegt die Aufgabe zugrunde, eine Betätigungsvorrichtung der eingangs beschriebenen Art derart zu verbessern, daß bei hohem Bedienkomfort, geringer Betätigungskraft, raumsparendender Einbaumöglichkeit und ungehinderter Spontanbewegung in eine Endstellung ein verringerter Aufwand zur Herstellung erforderlich ist.

Diese Aufgabe wird durch eine Betätigungsvorrichtung mit den Merkmalen des Anspruchs 1 gelöst.

Die erfindungsgemäße Betätigungsvorrichtung zeichnet sich bei hoher Funktionalität und günstiger Einbaumöglichkeit, insbesondere in den Sitzbereich im Fahrgastraum eines Fahrzeugs, durch einen einfachen Aufbau und - damit verbunden-durch niedrige Herstellungskosten aus. Die Befestigungsposition für die Betätigungsvorrichtung kann so gelegt werden, daß die Positionierung der Handhabe zum Einleiten einer Handkraft in das Geberteil in einer ergonomisch sehr günstigen Position erfolgen kann. Der verhältnismäßig geringe Druck, der in den die Hydraulikflüssigkeit führenden Leitungen herrscht, erlaubt die Verwendung von gewichtssparenden Kunststoffrohren. Die Hydraulikleitungen lassen sich leicht an und in der Rahmenstruktur eines Fahrzeugsitzes verlegen. So ist es beispielsweise möglich, die Leitungen zumindest teilweise verdeckt in den Tragrohren bzw. Hohlräumen der Sitzstruktur unterzubringen.

Die erfindungsgemäße Betätigungsvorrichtung kann bevorzugt auf eine an einer Führungsschiene angebrachte Verriegelungsvorrichtung wirken, die Rastöffnungen und mindestens ein als Rastbolzen ausgebildetes Verriegelungselement umfaßt.

Insbesondere erweist sich ein weiterer Vorteil dabei an einer Fahrzeugsitzbank, die sich über die gesamte Breite des Innenraumes eines Fahrzeuges ausdehnt und in Richtung der Fahrzeuglängsachse verschiebbar in zwei Führungsschienen gelagert ist. Entsprechend dem bei einer solchen Sitzbank weiten Abstand der Führungsschienen zueinander, den hohen aufzunehmenden Belastungen und der Erfüllung der Anforderungen an den Bedienkomfort kann für jede Führungsschiene eine Verriegelungsvorrichtung vorgesehen sein. Das Nehmerteil kann dabei mit Vorteil aus einer zwei Nehmerzylinder und zwei Nehmerkolben umfassenden Anordnung bestehen, die jeweils den Verriegelungsteilen an den beiden Führungsschienen zugeordnet sind. Durch die Erfindung wird dabei eine sichere und insbesondere synchrone Betätigung, der Verriegelung mittels einer einzigen Handhabe gewährleistet.

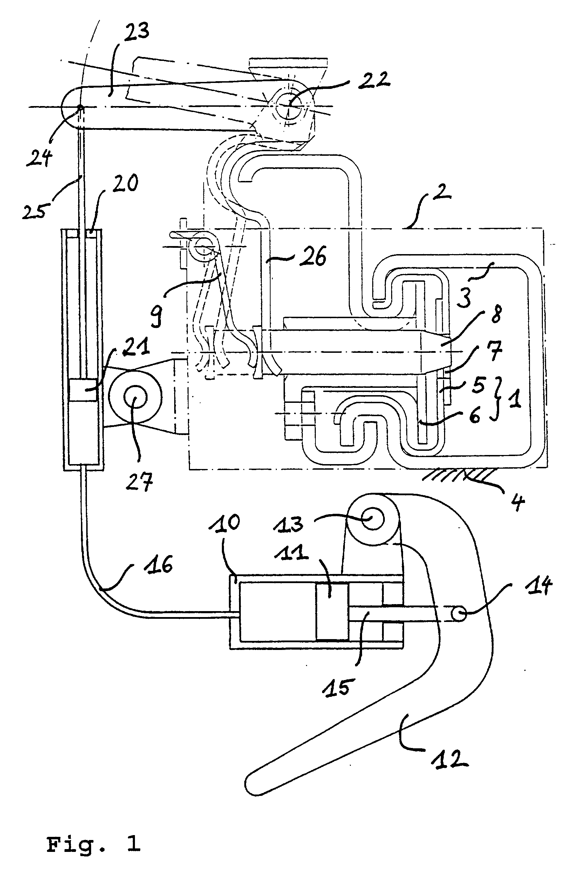

Weitere vorteilhafte Ausführungen der Erfindung sind in den Unteransprüchen und der nachfolgenden speziellen Beschreibung enthalten. Anhand eines in der beiliegenden Zeichnungen dargestellten Ausführungsbeispiels wird die Erfindung näher erläutert. Die einzige Figur (Fig. 1) zeigt dabei in schematisierter Ansicht eine Positioniereinrichtung zur Längsverstellung und verriegelten Halterung insbesondere eines Fahrzeugsitzes gegenüber einem Fahrzeugboden mit einer erfindungsgemäßen Betätigungsvorrichtung.

Die in Fig. 1 dargestellte Positioniereinrichtung umfaßt mindestens eine parallel zur Verstellachse angeordnete Führungsschiene 1 und mindestens eine Verriegelungseinrichtung 2. Die Führungsschiene 1 besteht aus einem über eine Tragschiene 3 fest mit dem Fahrzeugboden 4 verbundenen Unterteil 5 und einem mit dem nicht dargestellten Fahrzeugsitz relativ zu dem Unterteil 5 parallel zur Verstellachse verschiebbaren Oberteil 6. Die nicht näher bezeichnete Verstellachse verläuft dabei senkrecht zur Zeichnungsebene.

Beide Teile 5, 6 der Führungsschiene 1 sind zum Zwecke der Fixierung der eingestellten Längsposition des Sitzes gegeneinander verriegelbar. Die Verriegelungseinrichtung 2 umfaßt in der dargestellten Ausführung dabei im Unterteil 5 und im Oberteil 6 befindliche Rastöffnungen 7 und mindestens ein korrespondierendes Verriegelungselement 8, das als Rastbolzen ausgebildet ist. Das Verriegelungselement 8 ist mittels einer Feder 9 in einer verrasteten, übereinander angeordnete Rastöffnungen 7 des Unterteiles 5 und Oberteiles 6 durchgreifenden Stellung gehalten. Als Feder 9 kann mit Vorteil eine einfache Spiralfeder Anwendung finden.

Mittels der erfindungsgemäßen hydraulisch wirkenden Betätigungseinrichtung kann das Verriegelungselement 8 gegen die Wirkung der Feder 9 in eine entrastete Stellung bewegt werden, die in der Zeichnung durch eine Strichlinien-Darstellung veranschaulicht ist.

Die erfindungsgemäße Betätigungsvorrichtung umfaßt ein hydraulisch wirkendes Geberteil, das aus einer druckerzeugenden, einfachwirkenden, einen Geberzylinder 10 und einen Geberkolben 11 umfassenden Anordnung gebildet ist.

Auf das Geberteil wirkt eine Handhabe 12. Diese Handhabe 12 kann - wie dargestellt - vorzugsweise als Handhebel ausgebildet sein, der über ein Gelenk 13 mit dem Geberzylinder 10 und über ein weiteres Gelenk 14 mit einer Kolbenstange 15 des Geberkolbens 11 verbunden ist. Auf diese Weise können zur Druckerzeugung mit der Handhabe 12 Pumpbewegungen ausgeführt werden.

Weiterhin ist der erfindungsgemäßen Betätigungsvorrichtung ein über eine hydraulische Leitung 16 mit dem Geberteil verbundenes Nehmerteil zugehörig. Die an der Handhabe 12 aufgewendete Handkraft wird durch die in der hydraulischen Leitung 16 befindliche Flüssigkeit auf das Nehmerteil übertragen. Das Nehmerteil besteht aus einer einfachwirkenden, mindestens einen Nehmerzylinder 20 und einen Nehmerkolben 21 umfassenden Anordnung.

Der Durchmesser des Nehmerzylinders 20 kann dabei vorzugsweise kleiner als der Durchmesser des Geberzylinders 10 sein, so daß aus einem bestimmten, beim Betätigen der Handhabe 12 zurückgelegten Weg des Geberkolbens 11 ein vergrößerter Stellweg des Nehmerkolbens 21 bzw. der damit verbundenen Teile resultiert.

Ein an einem festen Gelenk 22 verschwenkbar gelagerter Hebel 23 ist über ein weiteres Gelenk 24 mit einer Kolbenstange 25 des Nehmerkolbens 21 verbunden. An dem Hebel 23 befindet sich ein Stellarm 26, der auf das Verriegelungselement 8 der Verriegelungseinrichtung 2 wirkt. Der Nehmerzylinder 20 ist zum Zusammenwirken mit dem Hebel 23 insbesondere mittels eines zu der Verriegelungseinrichtung 2 festen Gelenklagers 27 verschwenkbar gelagert. Mittels des Stellarmes 26 am Hebel 23 kann das Verriegelungselment 8 gegen die Wirkung der Feder 9 in seine entrastete Stellung bewegt werden. Bei Vorliegen der entrasteten Stellung des Verriegelungselementes 8 kann eine Neupositionierung, d.h. Längsverschiebung, des Fahrzeugsitzes bis in eine andere gewünschte Stellung erfolgen, in der wiederum eine Verriegelung mittels des Verriegelungselementes 8 erfolgt. Das Verriegelungselement 8 nimmt dabei unter der Wirkung der Feder spontan seine Raststellung ein.

Die Erfindung ist nicht auf das dargestellte Ausführungsbeispiel beschränkt, sondern umfaßt auch alle im Sinne der Erfindung gleichwirkenden Ausführungen. So könnte - wie bereits erwähnt - das Nehmerteil aus einer zwei Nehmerzylinder 20 und zwei Nehmerkolben 21 umfassenden Anordnung bestehen, die jeweils Verriegelungsteilen 8 an zwei Führungsschienen für einen Kraftfahrzeugsitz zugeordnet sind. Ebenso bestehen beispielsweise auch vielfältige Möglichkeiten zur alternativen technischen Gestaltung der Verriegelungseinrichtung 2.

Die beschriebene Betätigungsvorrichtung ist für eine Vielzahl von Verriegelungseinrichtungen einsetzbar, beispielsweise für Freischwenkeinrichtungen an den Rückenlehnen von Fahrzeugsitzen, für Motorhauben- und Kofferraumverschlüsse u.a.m.

### Bezugszeichen

- 1: Führungsschiene
- 2: Verriegelungseinrichtung
- 3: Tragschiene
- 4: Fahrzeugboden
- 5: Unterteil von 1
- 6: Oberteil von 1
- 7: Rastöffnungen
- 8: Verriegelungselement
- 9: Feder
- 10: Geberzylinder
- 11: Geberkolben
- 12: Handhabe
- 13: Gelenk an 10 und 12
- 14: Gelenk an 15 und 12
- 15: Kolbenstange an 11
- 16: hydraulische Leitung
- 20: Nehmerzylinder
- 21: Nehmerkolben
- 22: festes Gelenk an 23
- 23: Hebel
- 24: Gelenk an 23 und 25
- 25: Kolbenstange an 21
- 26: Stellarm an 23
- 27: Gelenk an 20 und 2

## Patentansprüche

1. Betätigungsvorrichtung einer Verriegelungseinrichtung (2) an einer Schienenführung (1) zur Verstellung und verriegelten Halterung eines Fahrzeugsitzes gegenüber einem Fahrzeugboden (4),
**gekennzeichnet durch** ein hydraulisch wirkendes Geberteil, eine auf das Geberteil wirkende Handhabe und ein über eine hydraulische Leitung mit dem Geberteil verbundenes Nehmerteil, wobei das Geberteil aus einer druckerzeugenden, einfachwirkenden, einen Geberzylinder (10) und einen Geberkolben (11) umfassenden Anordnung und das Nehmerteil aus einer einfachwirkenden, mindestens einen Nehmerzylinder (20) und einen Nehmerkolben (21) umfassenden Anordnung besteht, wobei der Nehmerzylinder (20) insbesondere verschwenkbar gelagert ist und eine Kolbenstange (25) des Nehmerkolbens (21) gelenkig mit einem verschwenkbar gelagerten Hebel (23) verbunden ist, der über einen Stellarm (26) auf ein als Rastbolzen ausgebildetes Verriegelungselement (8) der Verriegelungseinrichtung (2) wirkt, wobei das Verriegelungselement (8) mittels einer Feder (9) in einer verrasteten Stellung gehalten und mittels des Stellarmes (26) gegen die Wirkung der Feder (9) in eine entrastete Stellung bewegbar ist.

2. Betätigungseinrichtung nach Anspruch 1,
**dadurch gekennzeichnet, daß** der Durchmesser des Nehmerzylinders (20) kleiner als der Durchmesser des Geberzylinders (10) ist.

3. Betätigungseinrichtung nach Anspruch 1 oder 2,
**dadurch gekennzeichnet, daß** die Handhabe (12) als Handhebel ausgebildet ist, der über ein Gelenk (13) mit dem Geberzylinder (10) und über ein weiteres Gelenk (14) mit einer Kolbenstange (15) des Geberkolbens (11) verbunden ist.

4. Betätigungseinrichtung nach einem der Ansprüche 1 bis 3,
**dadurch gekennzeichnet, daß** die die Verriegelungseinrichtung (2) an mindestens einer parallel zur Verstellachse angeordneten Führungsschiene (1) angeordnet ist.

5. Betätigungseinrichtung nach Anspruch 4,
**dadurch gekennzeichnet, daß** die Führungsschiene (1) ein fest mit dem Fahrzeugboden (4) verbundenes Unterteil (5) und ein mit dem Fahrzeugsitz relativ zum Unterteil (5) parallel zur Verstellachse verschiebbares Oberteil (6) aufweist, wobei die Verriegelungseinrichtung (2) durch im Unterteil (5) und im Oberteil (6) befindliche Rastöffnungen (7) und das als Rastbolzen ausgebildete Verriegelungselement (8) gebildet ist.

6. Betätigungseinrichtung nach einem der Ansprüche 1 bis 5,
**dadurch gekennzeichnet, daß** das Nehmerteil aus einer zwei Nehmerzylinder (20) und zwei Nehmerkolben (21) umfassenden Anordnung besteht, die jeweils Verriegelungsteilen (8) an zwei Führungsschienen (1) zugeordnet sind.

## Claims

1. Actuating device of a locking mechanism (2) on a rail guide (1) for the adjustment and locked securing of a vehicle seat with respect to a vehicle floor (4), **characterized by** a hydraulically acting master part, a handle acting on the master part, and a slave part which is connected to the master part via a hydraulic line, the master part comprising a pressure-generating, single-acting arrangement containing a master cylinder (10) and a master piston (11), and the slave part comprising a single-acting arrangement containing at least one slave cylinder (20) and a slave piston (21), the slave cylinder (20) being, in particular, mounted pivotably and a piston rod (25) of the slave piston (21) being connected in an articulated manner to a lever (23) which is mounted pivotably and acts, via an adjusting arm (26), on a locking element (8) of the locking mechanism (2), which element is designed as a latching bolt, the locking element (8) being held in a latched position by means of a spring (9) and being movable counter to the effect of the spring (9) into an unlatched position by means of the adjusting arm (26).

2. Actuating mechanism according to Claim 1, **characterized in that** the diameter of the slave cylinder (20) is smaller than the diameter of the master cylinder (10).

3. Actuating mechanism according to Claim 1 or 2, **characterized in that** the handle (12) is designed as a hand lever which is connected to the master cylinder (10) via a joint (13) and to a piston rod (15) of the master piston (11) via a further joint (14).

4. Actuating mechanism according to one of Claims 1 to 3, **characterized in that** the locking mechanism (2) is arranged on at least one guide rail (1) arranged parallel to the adjustment axis.

5. Actuating mechanism according to Claim 4, **characterized in that** the guide rail (1) has a lower part (5) connected fixedly to the vehicle floor (4) and an upper part (6) which can be displaced together with the vehicle seat relative to the lower part (5) parallel to the adjustment axis, the locking mechanism (2) being formed by latching openings (7) situated in the lower part (5) and in the upper part (6) and by the locking element (8) which is designed as a latching bolt.

6. Actuating mechanism according to one of Claims 1 to 5, **characterized in that** the slave part comprises an arrangement containing two slave cylinders (20) and two slave pistons (21) which are assigned in each case to locking parts (8) on two guide rails (1).

## Revendications

1. Dispositif d'actionnement d'un dispositif de verrouillage (2) prévu sur une glissière (1) servant pour le réglage et le maintien d'un siège de véhicule à l'état verrouillé par rapport au plancher (4) du véhicule,
**caractérisé par** une partie émettrice, à action hydraulique, une manette qui agit sur la partie émettrice, et une partie réceptrice reliée à la partie émettrice par une conduite hydraulique, la partie émettrice étant composée d'un ensemble générateur de pression, à simple effet, qui comprend lui-même un cylindre émetteur (10) et un piston émetteur (11), et la partie réceptrice étant composée d'un ensemble à simple effet qui comprend au moins un cylindre récepteur (20) et un piston récepteur (21), le cylindre récepteur (20) étant en particulier monté pivotant et une tige de piston (25) du piston récepteur (21) étant reliée de façon articulée à un levier (23) monté pivotant, qui agit, par l'intermédiaire d'un bras d'actionnement (26) sur un élément de verrouillage (8), constitué par une goupille d'arrêt, du dispositif de verrouillage (2), l'élément de verrouillage (8) étant maintenu dans une position arrêtée au moyen d'un ressort (9) et pouvant être amené dans une position déverrouillée à l'encontre de l'action du ressort (9) au moyen du bras d'actionnement (26).

2. Dispositif d'actionnement selon la revendication 1,
**caractérisé en ce que** le diamètre du cylindre récepteur (20) est plus petit que le diamètre du cylindre émetteur (10).

3. Dispositif d'actionnement selon la revendication 1 ou 2,
**caractérisé en ce que** la manette (12) est constituée par un levier à main qui est relié au cylindre émetteur (10) par l'intermédiaire d'une articulation (13) et à une tige de piston (15) du piston émetteur (11) par l'intermédiaire d'une autre articulation (14).

4. Dispositif d'actionnement selon une des revendications 1 à 3,
**caractérisé en ce que** le dispositif de verrouillage (2) est disposé sur au moins une glissière (1) disposée parallèlement à l'axe de réglage.

5. Dispositif d'actionnement selon la revendication 4,
**caractérisé en ce que** la glissière (1) comprend une partie inférieure (5) reliée rigidement au plancher (4) du véhicule et une partie supérieure (6) qu'on peut faire coulisser, avec le siège du véhicule, par rapport à la partie inférieure (5), parallèlement à l'axe de réglage, le dispositif de verrouillage (2) étant formé par des ouvertures d'arrêt (7) qui se trouvent dans la partie inférieure (5) et dans la partie supérieure (6) et par l'élément de verrouillage (8) réalisé sous la forme d'une goupille d'arrêt.

6. Dispositif d'actionnement selon une des revendications 1 à 5,
**caractérisé en ce que** la partie réceptrice est constituée par un ensemble comprenant deux cylindres récepteurs (20) et deux pistons récepteurs (21) qui sont associés respectivement à des parties de verrouillage (8) prévues sur deux rails de glissières (1).
